# EUROPEAN PATENT SPECIFICATION

(11) **EP 3 000 625 B1**
(45) Date of publication and mention of the grant of the patent: **03.01.2018**
(21) Application number: 14800584.6
(22) Date of filing: 19.05.2014
(51) Int. Cl.: B60C 15/024, B60C 15/06, B60C 17/00

(54) **RUN FLAT TIRE**
REIFEN MIT NOTLAUFRING
PNEUMATIQUE À MOBILITÉ ÉTENDUE

(30) Priority: 20.05.2013 JP 2013106407
(43) Date of publication of application: 30.03.2016
(73) Proprietor: Bridgestone Corporation, Tokyo 104-8340 (JP)
(72) Inventor: MOTOORI, Osamu, Kodaira-shi Tokyo 187-8531 (JP)
(74) Representative: Oxley, Robin John George
(86) International application number: PCT/JP2014/002629
(87) International publication number: WO 2014/188700

(56) References cited:
- JP-A- H0 920 110
- JP-A- H1 191 321
- JP-A- 2001 225 614
- JP-A- 2002 513 361
- JP-A- 2009 126 262
- JP-A- 2010 111 173
- JP-A- 2010 111 173
- US-A- 4 351 382
- US-A- 5 968 294

## Description

### TECHNICAL FIELD

The present invention relates to a run flat tire.

### BACKGROUND ART

There have been proposed, as what is called "run flat tires" each capable of running a certain distance without losing load-carrying capacity thereof when the tire internal pressure has decreased due to puncture or the like, side-reinforcing type run flat tires of various types in which rigidity of each sidewall portion is enhanced by provision of a side-reinforcing rubber having a crescent-shaped cross section and relatively high elasticity on the inner peripheral side of a carcass of the sidewall portion of the tire.

Each of such side-reinforcing type run flat tires having side-reinforcing rubbers as described above can run, with the help of the side-reinforcing rubber, without experiencing large flexural deformation when the tire goes straight in run flat running (i.e. running in a state where the internal pressure of the tire has significantly decreased due to puncture or the like). However, when the run flat tire makes a turn, the tire experiences significant deformation in the tire width direction in particular because lateral force is exerted thereon by the turn. Deformation of the run flat tire by lateral force then pulls a bead portion, as well as the corresponding sidewall portion, of the tire toward the turning center side, whereby the bead portion may climb over a rim hump to possibly drop onto a well bed of a rim or the bead portion may possibly climb over a rim flange. As a result, the bead portion tends to come off from a rim seat of the rim in the run flat tire.

In view of the aforementioned problem that a bead portion tends to come off from a rim in the conventional side-reinforcing type run flat tire, there have been proposed: use of a rim having a specific shape which prevents a bead portion of a tire from climbing over a rim hump when lateral force is exerted on the tire; a tire capable of well preventing a bead portion from coming off from a rim seat when lateral force is exerted thereon by, for example, embedding a bead core at a specific position in the bead portion (e.g. PTL 1); and the like.

### CITATION LIST

### Patent Literature

PTL 1: JP-A 2009-126262. Attention is also drawn to the disclosures of JP H11 91321, US 5,968,294 and JP H09 20110.

### SUMMARY

The rim having a specific shape as described above, however, necessitates a user to newly buy the particular rim, together with a run flat tire, when the user who wants to use the run flat tire does not have that particular rim, thereby placing a financial burden on the user. Further, the rim of this type has another demerit in terms of efficiently utilizing resources because the rim renders a standard rim which has been used by the user redundant.

Regarding the run flat tire as disclosed in PTL 1, yet higher resistance to coming off from a rim is requested, although the run flat tire can somehow prevent a bead portion from coming off from a rim seat. In this connection, it is known that too high resistance to coming off of a bead portion from a rim in a run flat tire fixes the bead portion to the rim so firmly as to suppress even a slight movement of the bead portion in the rim in run flat running, thereby facilitating generation of strains in a side-reinforcing rubber provided on the outer side in the tire radial direction of the bead portion to possibly cause a problem of deterioration in durability of the side-reinforcing rubber.

In view of the aforementioned situation, an object of the present disclosure is to provide a run flat tire capable of ensuring satisfactorily high resistance to coming off of a bead portion from a rim in run flat running, while maintaining satisfactorily high durability of a side-reinforcing rubber.

According to a first aspect of the invention, there is provided a run flat tire, as claimed in claim 1. According to this structure, it is possible to ensure satisfactorily high resistance to coming off of a bead portion from a rim in a run flat tire in run flat running, while maintaining satisfactorily high durability of a side-reinforcing rubber of the tire. According to this structure, it is possible to further ensure satisfactorily high resistance to coming off of a bead portion from a rim in a run flat tire in run flat running, while effectively preventing durability of a side-reinforcing rubber of the tire from deteriorating. According to this structure, it is possible to further ensure satisfactorily high resistance to coming off of a bead portion from a rim in a run flat tire in run flat running, while maintaining satisfactorily good tire-rim assembling properties when the tire is assembled with a prescribed rim.

In our run flat tire, an angle, dimensions, and the like of a structural member thereof is to be measured, unless otherwise specified, in a state where: the tire is not assembled with a prescribed rim with no load exerted thereon; the tire has a distance between respective bead portions matching a corresponding distance when the tire is assembled with the prescribed rim; and a bead back surface as the outer side surface in the tire width direction of a bead portion, which surface is to be brought into contact with a rim flange when the respective bead portions are assembled with the prescribed rim, is placed to be vertical with respect to the tire width direction. A "prescribed rim" represents a standard rim prescribed for each application tire size in "JATMA YEAR BOOK" as an industrial standard of "The Japan Automobile Tyre Manufacturers Association, Inc." of Japan.

Further, in our run flat tire, an "annular inner end in the tire radial direction of a bead core" represents an annular inner end in the tire radial direction of a cord positioned on the innermost side in the tire radial direction of cords constituting the bead core.

Yet further, in our run flat tire, "the bead base surface" represents the inner peripheral surface in the tire radial direction of a bead portion, which surface is to be brought into contact with a bead seat of a prescribed rim when the respective bead portions are assembled with the prescribed rim and "the bead back surface" represents the outer side surface in the tire width direction of the bead portion, which surface is to be brought into contact with a rim flange of a prescribed rim when the respective bead portions are assembled with the prescribed rim.

Yet further, in our run flat tire, "diameter of an annular end" and "diameter of a circle collectively formed by a point" each represent diameter of a circle collectively formed by linking the end/the point in the tire circumferential direction.

In our run flat tire, it is preferable to provide the features of claim 2. Good tire-rim assembly properties can be maintained by this structure when the tire is assembled with a prescribed rim.

Further, in our run flat tire, it is preferable to provide the features of dependent claim 3.

In our run flat tire, a "bead toe" represents an innermost portion on the tire width direction of the bead portion and a "bead inner surface" represents a surface, facing the inner cavity of the tire, of the bead portion.

In our run flat tire, it is preferable to provide the features of claim 4. It is also preferable to provide the features of claim 5.

Further, in our run flat tire, it is preferable to provide the features of claim 6. This structure maintains satisfactorily high rigidity of a bead toe and thus successfully prevents the bead toe from being damaged when the tire is assembled with a prescribed rim. In this connection, "an angle formed at a bead toe point by linear outer contour lines/imaginary linear extensions of curved outer contour lines of the bead portion" represents in our run flat tire i) an angle formed by an imaginary linear extension of a bead base surface from an end on the bead base surface side of an outer contour line of a bead toe and an imaginary linear extension of a bead inner surface from an end on the bead inner surface side of the outer contour line of the bead toe in a case where the outer contour line of the bead toe is constituted of a curved line (the bead toe point is an intersection of the two linear extensions in this case) or ii) an angle formed by an outer contour line, on the bead base surface side, of the bead toe and an outer contour line, on the bead inner surface side, of the bead toe in a case where the outer contour line of the bead toe is constituted of straight lines (the bead toe point is an intersection of the two straight lines in this case).

Yet further, it is preferable in our run flat tire to provide the features of claim 7. According to this structure, it is possible to further ensure satisfactorily high resistance to coming off of a bead portion from a rim in the tire.

According to our run flat tire, it is possible to provide a run flat tire capable of ensuring satisfactorily high resistance to coming off of a bead portion from a rim in run flat running, while maintaining satisfactorily high durability of a side-reinforcing rubber.

### BRIEF DESCRIPTION OF THE DRAWINGS

In the accompanying drawings, wherein:
FIG. 1 is a cross sectional view in the tire width direction, showing a run flat tire as one embodiment of our run flat tire;
FIG. 2 is a cross sectional view in the tire width direction, showing a vicinity of a bead portion of the run flat tire of FIG. 1 in an enlarged manner.

### DETAILED DESCRIPTION

An embodiment of our run flat tire will be demonstratively described in detail with reference to the drawings.

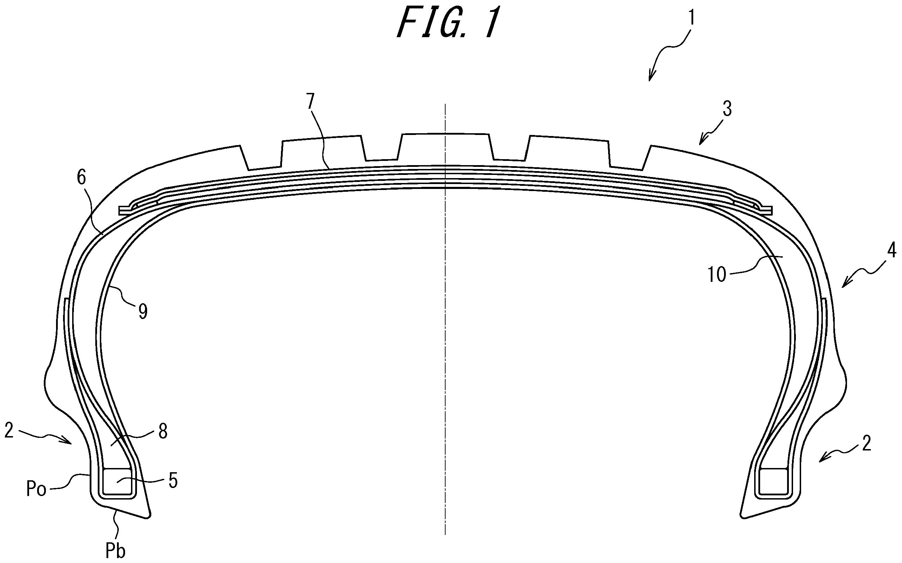

FIG. 1 is a cross sectional view in the tire width direction, showing a run flat tire 1 as one embodiment of our run flat tire (not assembled with a prescribed rim with no load exerted thereon in FIG. 1). The run flat tire 1 may occasionally be referred to simply as "the tire" hereinafter. The run flat tire 1 has a distance between respective bead portions 2 (described below in detail) matching a corresponding distance when the tire is assembled with a prescribed rim. A bead back surface Po as the outer side surface of each bead portion 2, which surface is to be brought into contact with a rim flange when the respective bead portions 2 are assembled with the prescribed rim, is placed to be vertical with respect to the tire width direction.

The run flat tire 1 shown in FIG. 1 is what is called a "run flat tire" capable of running a certain distance without losing load-carrying capacity thereof when the tire internal pressure has decreased due to puncture or the like. The run flat tire 1 has a tread portion 3, a pair of sidewall portions 4 continuous with respective sides of the tread portion 3, and the bead portions 2 continuous with the respective sidewall portions 4. The run flat tire 1 further has bead cores 5 each embedded in the corresponding bead portion 2, and a carcass 6 constituted of a carcass main body portion extending in a toroidal shape across the respective bead cores 5 along the tread portion 3, the sidewall portions 4 and the bead portions 2 and carcass turned-up portions positioned on the outer side in the tire width direction of the carcass main body, respectively, and each extending from the carcass main body to be turned up around the corresponding bead core 5 from the inner side toward the outer side in the tire radial direction.

A belt 7, constituted of three laminated belt layers as rubber-coated cord layers, is provided on the outer side in the tire radial direction of the carcass 6 in the tread portion 3. A tread rubber is provided on the outer side in the tire radial direction of the belt 7. Tread grooves such as a circumferential groove extending in the tire circumferential direction are formed at a surface of the tread rubber. The number of the belt layers and/or the positions thereof may be changed according to necessity in the run flat tire 1, i.e. our run flat tire, although FIG. 1 shows a case where the belt 7 is constituted of totally three belt layers.

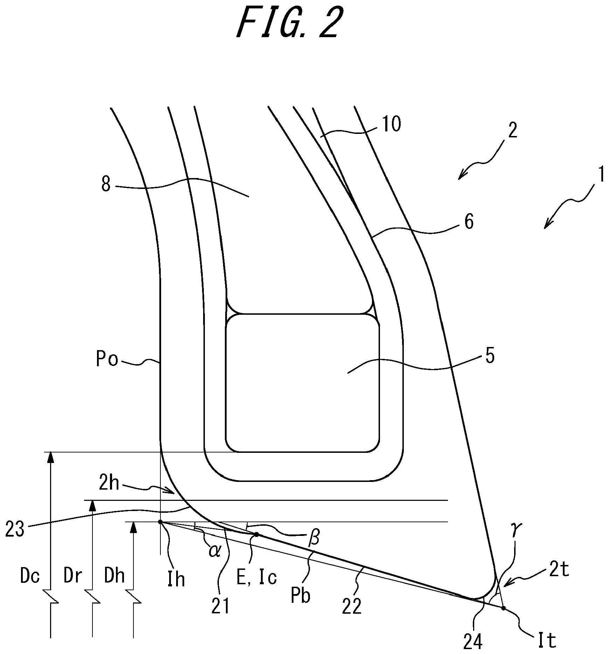

A bead filler 8 having a substantially triangular cross section is provided on the outer side in the tire radial direction of each bead core 5 embedded in the bead portion 2 so that the bead filler 8 extends between the carcass main body portion and the corresponding carcass turned-up portion positioned on the outer side in the tire width direction of the carcass main body portion, to gradually decrease thickness thereof along the carcass 6 toward the outer side in the tire radial direction, as shown in FIG. 1 and FIG. 2.

Further, a side-reinforcing rubber 10 having a substantially crescent-shaped cross section and made of rubber of relatively high elasticity is provided on the inner side in the tire width direction of the carcass 6 in each sidewall portion 4 (specifically, between the carcass 6 and an inner liner 9 provided on the inner surface side of the carcass 6 in a region ranging from an end in the tire width direction of the tread portion 3 to the corresponding bead portion 2). The side-reinforcing rubber 10 may alternatively be provided on the outer side in the tire width direction of the carcass 6 or between carcass layers in a case where the carcass 6 is formed by two carcass layers (not shown in the drawings).

The bead portion 2 has in the present embodiment a bead heel 2h and a bead toe 2t, of which outer contour lines are each constituted of a curved line in a cross section in the tire width direction of the tire, as shown in FIG. 2. The bead heel 2h of the bead portion 2 is positioned on the outer side in the tire radial direction of the bead toe 2t. The outer contour line of the bead heel 2h and/or the outer contour line of the bead toe 2t may be each formed by combination of straight lines.

The inventors of our run flat tire, as a result of a keen study of ensuring satisfactorily high resistance to coming off of a bead portion from a rim in a run flat tire, while maintaining satisfactorily high durability of a side-reinforcing rubber thereof, made the following discoveries. That is, resistance to coming off of a bead portion from a rim in a run flat tire can be enhanced by an increase in clamping force exerted by a bead portion on a rim. Simply increasing the clamping force exerted by a bead portion on a rim, however, may fix the bead portion on the rim too firmly and constrain the bead portion in the rim when lateral force is exerted on the tire in run flat running, whereby an inner side portion in the tire radial direction of the side-reinforcing rubber, subjected to flexural deformation between a rim flange and a road surface, significantly bends to possibly cause concentration of strains on the side-reinforcing rubber. Such concentration of strains on the side-reinforcing rubber may eventually generate cracks in the side-reinforcing rubber and decrease durability thereof.

In view of these discoveries, diameter Dc of an annular inner end in the tire radial direction of the bead core 5 is larger by 3.0-4.5 mm than rim diameter Dr of a prescribed rim; and diameter Dh of a circle collectively formed by the bead heel point Ih is smaller by 1.7-2.9 mm than the rim diameter Dr of the prescribed rim in a cross section in the tire width direction of the run flat tire 1, as shown in FIG. 2.

According to this structure, the bead portion 2 is firmly fixed on the rim because the diameter Dc of the bead core 5 is set to be larger, by ≤ 4.5 mm, than the rim diameter Dr of the prescribed rim. As a result, contact pressure exerted by a bead base surface Pb of the bead portion 2 on a rim seat increases, to successfully suppress a positional shift of the bead portion 2 when lateral force is applied to the tire in run flat running thereof. Further, the bead portion 2 is prevented from being fixed too firmly on the rim when lateral force is applied to the tire in run flat running thereof because the diameter Dc of the bead core 5 is set to be larger, by ≥ 3.0 mm, than the rim diameter Dr of the prescribed rim. As a result, it is possible to prevent strains from concentrating on the side-reinforcing rubber 10 and thus durability of the side-reinforcing rubber 10 from being deteriorated.

Further, according to the aforementioned structure, a portion on the bead heel 2h side of the bead portion 2 is firmly fixed on the rim because the diameter Dh of the bead heel point Ih is set to be smaller, by ≥ 1.7 mm, than the rim diameter Dr of the prescribed rim. As a result, contact pressure exerted on the rim seat by the portion on the bead heel 2h side of the bead base surface Pb increases to successfully suppress a positional shift of the bead portion 2 when lateral force is applied to the tire in run flat running thereof, thereby ensuring satisfactorily high resistance to coming off of the bead portion from the rim in the run flat tire. Further, the bead portion 2 is prevented from being fixed too firmly on the rim when lateral force is applied to the tire in run flat running thereof because the diameter Dh is set to be smaller, by ≤ 2.9 mm, than the rim diameter Dr of the prescribed rim. As a result, it is possible to prevent strains from concentrating on the side-reinforcing rubber 10 and thus durability of the side-reinforcing rubber 10 from being deteriorated.

In terms of ensuring satisfactorily high resistance to coming off of a bead portion from a rim in the run flat tire, while well preventing strains from concentrating on the side-reinforcing rubber 10, it is preferable in a cross section in the tire width direction of the tire that: the diameter Dc is set to be larger by 3.0-4.2 mm than the rim diameter Dr and the diameter Dh is set to be smaller by 2.0-2.9 mm than the rim diameter Dr when the sectional height is ≥ 120 mm; and the diameter Dc is set to be larger by 3.3-4.5 mm than the rim diameter Dr and the diameter Dh is set to be smaller by 1.7-2.6 mm than the rim diameter Dr when the sectional height is < 120 mm. The "sectional height" represents a value obtained by multiplying "nominal cross sectional width" and "nominal aspect ratio" of a tire.

An operation for assembling a run flat tire with a rim generally includes: making each bead portion climb over a corresponding rim flange of the rim, to once position the bead portion on a well bed on the inner side than a corresponding rim hump; and then increasing tire internal pressure to a predetermined value so that the bead portion climbs over the rim hump to reach the predetermined position on a rim seat. Accordingly, a run flat tire having a side-reinforcing rubber of high elasticity provided in each sidewall portion tends to experience some difficulty in a tire-rim assembling operation when each bead portion climbs over a rim flange and/or a rim hump, as compared with a standard pneumatic tire. Preventing such difficulty in the tire-rim assembling operation from occurring is therefore requested in a run flat tire having a side-reinforcing rubber of high elasticity.

In this regard, it is preferable that: in a cross section in the tire width direction of the tire the outer contour line of the bead heel 2h of each bead portion 2 is constituted of a single arc; and an end E, on the bead base surface Pb side, of the arc is positioned on the inner side in the tire width direction of the outer end in the tire width direction of the bead core 5. According to this structure, a sharp corner is eliminated from the bead heel 2h of which outer contour line is constituted of a single arc, whereby the tire-rim assembling operation can be carried out smoothly without the bead portion being hooked by the rim hump or the like. Further, a volume of rubber which forms the bead heel 2h can be reduced by positioning the end E of the arc on the inner side in the tire width direction than the outer end in the tire width direction of the bead core 5, whereby good tire-rim assembling properties can be maintained (if the end E, on the bead base surface Pb side, of the arc were to be positioned on the outer side in the tire width direction than the outer end in the tire width direction of the bead core 5, a volume of rubber which forms the bead heel 2h would increase, thereby possibly disturbing the bead heel's smoothly climbing over the rim hump). Yet further, rubber for the bead portion 2 can flow smoothly when a green tire is vulcanized because the outer contour line of the bead heel 2h is constituted of a single arc, whereby a defect rate in the manufacturing process can be decreased. In this connection, setting diameter Dc to be larger by 3.0-4.5 mm than rim diameter Dr and setting diameter Dh to be smaller by 1.7-2.9 mm than the rim diameter Dr in a cross section in the tire width direction of the run flat tire 1, as described above, also contributes to maintaining good tire-rim assembling properties.

The outer contour line of the bead heel 2h, when the contour line is constituted of a single arc in a cross section in the tire width direction of the tire, preferably has a radius of curvature of the arc in the range of 5.0-8.0 mm. The radius of curvature of the arc ≥ 5.0 mm can maintain good tire-rim assembling properties. The radius of curvature of the arc ≤ 8.0 mm can prevent a volume of rubber which forms the bead heel 2h from decreasing excessively, thereby ensuring satisfactorily high resistance to coming off of a bead portion from a rim in the run flat tire (too small a volume of rubber which forms the bead heel 2h may lower resistance to coming off of a bead portion from a rim in the run flat tire).

A line linking the bead heel point Ih and the bead toe point It is inclined, by an angle α which is in the range of 12.2°-14.7°, with respect to the tire width direction in the run flat tire 1, as shown in FIG. 2. According to this structure, it is possible to further enhance resistance to coming off of a bead portion from a rim in the run flat tire when lateral force is applied to the tire in run flat running, while well preventing strains from concentrating on the side-reinforcing rubber 10. Specifically, the angle α ≥ 12.2° increases contact pressure exerted on the rim by the portion on the bead toe 2t side of the bead portion 2 and thus successfully suppresses a positional shift of the bead portion 2 when lateral force is applied to the tire in run flat running thereof, thereby ensuring satisfactorily high resistance to coming off of the bead portion from the rim in the run flat tire. Further, the angle α ≤ 14.7° prevents the contact pressure exerted on the rim by the portion on the bead toe 2t side of the bead portion 2 from being too large and thus the bead portion 2 from being fixed too firmly on the rim, thereby effectively preventing strains from concentrating on the side-reinforcing rubber 10, i.e. durability of the side-reinforcing rubber 10 from deteriorating.

In terms of ensuring satisfactorily high resistance to coming off of a bead portion from a rim in the run flat tire, while well preventing strains from concentrating on the side-reinforcing rubber 10, it is preferable in a cross section in the tire width direction of the tire that: the angle α is in the range of 12.5°-14.7° when the sectional height is ≥ 120 mm; and the angle α is in the range of 12.2°-14.4° when the sectional height is < 120 mm.

In the run flat tire 1, it is preferable in a cross section in the tire width direction thereof an outer contour line of a bead base corresponding to the bead base surface Pb, of an outer contour line of the bead portion 2, includes a linear bead toe-side portion 22 and a curved/linear bead heel-side portion 21 linked with the bead toe-side portion 22 at a linking point Ic, wherein the bead toe-side portion 22 is inclined, by an angle β in the range of 17.5°-19.5°, with respect to the tire width direction. In this connection, a tangent of the bead heel-side portion 21 differs from a tangent of the bead toe-side portion 22 when the bead heel-side portion 21 is linear. The bead heel-side portion 21 constitutes a portion of a curved portion 23 of the outer contour line of the bead heel 2h; the end E of the curved portion 23 of the bead heel 2h (i.e. the end E, on the bead base surface Pb side, of the outer contour line of the bead heel 2h) coincides with the linking point Ic; and a bead base portion extending from the linking point Ic to a curved portion 24 of the bead toe 2t, to be inclined on the inner side in the tire radial direction, constitutes the bead toe-side portion 22 in the present embodiment, as shown in FIG. 2. The bead base surface Pb protrudes toward the outer side in the tire radial direction at the linking point Ic in the present embodiment. The bead toe point It is preferably positioned on a liner extension of the bead toe-side portion 22.

According to the aforementioned structure, the angle β ≥ 17.5° increases contact pressure exerted on the rim by the bead toe-side portion 22 of the bead portion 2 and thus effectively enhances resistance to coming off of the bead portion from the rim in the run flat tire when lateral force is applied to the tire in run flat running thereof. Further, the angle β ≤ 19.5° prevents the inclination angle of the bead toe-side portion 22 from being too large and increases rigidity of the bead toe 2t. Besides, the angle β ≤ 19.5° allows, for example, the bead toe 2t to smoothly climb over a rim flange without being hooked when the bead portion 2 climbs over the rim flange in the operation of assembling the tire 1 with the rim. That is, a damage such as tip chipping, of the bead toe 2t, can be prevented from occurring and thus good tire-rim assembling properties can be maintained. Yet further, the angle β ≤ 19.5° makes ground contact pressure exerted by the bead toe-side portion 22 on the rim even and increases the friction coefficient, thereby effectively enhancing resistance to coming off of the bead portion from the rim in the run flat tire when lateral force is applied to the tire in run flat running thereof.

In terms of improving the tire-rim assembling properties to prevent the bead portion from being damaged in the tire-rim assembling operation, while ensuring satisfactorily high resistance to coming off of a bead portion from a rim in the run flat tire, it is preferable in a cross section in the tire width direction of the tire that: the angle β is in the range of 18.0°-19.5° when the sectional height is ≥ 120 mm; and the angle β is in the range of 17.5°-19.0° when the sectional height is < 120 mm.

Although the bead heel-side portion 21 constitutes a portion of the curved portion 23 of the outer contour line of the bead heel 2h in the bead portion 2 shown in FIG. 2, the bead heel-side portion 21 and the linking point Ic may be provided, separately from the curved portion 23 and the end E thereof, on the bead base surface Pb on the inner side in the tire width direction than the curved portion 23. In such a case, a tangent of the bead heel-side portion 21 with respect to the tire width direction is preferably less than 17.5° when the bead heel-side portion 21 is linear.

The linking point Ic is preferably located, in a cross section in the tire width direction of the tire, within a widthwise region corresponding to the presence of the bead core 5 in the tire width direction (i.e. directly on the inner side in the tire radial direction of the bead core 5). Contact pressure exerted by the bead portion 2 on a rim changes between the bead heel 2h side and the bead toe 2t side at the linking point Ic as the changing point. It is possible to make the contact pressure less uneven by locating the linking point Ic directly on the inner side in the tire radial direction of the bead core 5 having relatively high rigidity. In this connection, the linking point Ic and the end E are preferably each located directly on the inner side in the tire radial direction of the bead core 5 in a case where the linking point Ic differs in position from the end E, for the same reason as described above, although the linking point Ic coincides with the end E of the curved portion 23 of the bead heel 2h in the present embodiment shown in FIG. 2.

An angle y of the bead toe point It is preferably ≥ 30° in the present embodiment. Rigidity of the bead toe 2t then enhances, thereby well preventing damage such as tip chipping of the bead toe 2t from occurring when the tire 1 is assembled with a rim.

The angle γ of the bead toe point It is preferably in the range of 30° to 90° because the range is advantageous in the manufacturing process.

It is possible to further enhance resistance to coming off of the bead portion from a rim in the run flat tire in run flat running thereof when lateral force is applied to the tire, by increasing rigidity of the portion on the inner side in the tire radial direction than the bead core 5, of the bead core 2. Accordingly, a textile chafer (not shown in the drawing) is preferably provided at least between the bead core 5 and the bead base surface Pb in the run flat tire 1, i.e. our run flat tire. A reinforcing cord layer formed by coating a layer of aligned organic fiber cords with rubber can be used as the textile chafer. The cords of the textile chafer are to be inclined with respect to the tire circumferential direction by an angle in the range of 30° to 60° (the angle is preferably 45°).

An embodiment of our run flat tire has been demonstratively described with reference to the drawings in the foregoing descriptions. Our run flat tire, however, is not restricted to the aforementioned example and may be changed/modified in an appropriate manner.

### EXAMPLES

Our run flat tire will be described further in detail by the following Examples, which do not restrict our run flat tire by any means.

Test tires of Examples 1-21 are run flat tires each having a side-reinforcing rubber, tire size: 205/55R16, the characteristics shown in Table 1, and structures as shown in FIGS. 1 and 2. Test tires of Comparative Examples 1-4 are prepared in the same manner as Example 1 tire, except that the respective structures of bead portions of the formers differ from the latter in the relevant characteristic shown in Table 1. Performances of these test tires were evaluated by the following methods. The results are shown in Table 1.

### Tire-rim assembling test:

Tire-rim assembling properties were evaluated by visually observing: whether or not damage occurred in the bead toe when each test tire was assembled with a rim having rim size: 6.5J-16; and whether or not a bead portion was able to climb over a rim hump on the first try at the standard (tire internal) pressure applied in the tire-rim assembling operation (if the bead portion cannot climb over the rim hump on the first try, it will be necessary to depressurize the tire and subject the tire and the rim to recoating with lubricant). Tire-rim assembling properties are regarded as good when no damage occurred in the bead toe and the bead portion was able to climb over the rim hump at the standard (tire internal) pressure to allow the tire to be assembled with the rim on the first try.

### Run flat turning test:

Run flat turning test was carried out by: assembling each test tire with a rim as described above; setting internal pressure of the test tire to be 0 kPa; mounting the test tire on a vehicle having weight of 2t; subjecting the vehicle to a running-in operation by running the vehicle by 5 km at 20 km/hour; then running the vehicle at predetermined speed on a turn testing course having a radius of 25 m and stopping the vehicle when the vehicle completed 1/3 of the turn; making the vehicle go the second run on the turn testing course in the same manner as the first run; continuing the test, with increasing the speed of the vehicle by 1 km/hour, when the test tire had not come off from the rim and the side-reinforcing rubber of the tire had not broken (i.e. when the vehicle was able to run) after the second run; and recording the speed when either the bead portion came off from the rim or the side-reinforcing rubber broke (i.e. the turning limit speed). The higher turning limit speed represents the larger resistance to coming off of the bead portion from a rim and the better maintenance of satisfactory durability of the side-reinforcing rubber of the test tire.

**Table 1**

| | "Bead core Dc" - "Rim diameter Dr" (mm) | "Rim diameter Dr" - "Bead heal Dh" (mm) | Angleα (°) | Angle β (°) | Angle γ (°) | Tire-rim assembling test | | Run flat turning test | | |
|---|---|---|---|---|---|---|---|---|---|---|
| | | | | | | Occurrence of damage in bead toe | Able to climb over rim hump? | Turning limit speed (km/hour) | Phenomenon which occurred at Turning limit speed | |
| | | | | | | | | | Bead came off from rim? | Side-reinforcing rubber cracked? |
| Comp. Ex. 1 | 2.9 | 2.3 | 13.4 | 18.3 | 61 | No | Yes | 31 | No | Yes |
| Comp. Ex. 2 | 4.6 | 2.3 | 13.4 | 18.3 | 61 | No | Yes | 31 | Yes | No |
| Comp. Ex. 3 | 3.9 | 1.6 | 13.4 | 18.3 | 61 | No | Yes | 30 | Yes | No |
| Comp. Ex. 4 | 3.9 | 3 | 13.4 | 18.3 | 61 | No | Yes | 30 | No | Yes |
| Example 1 | 3.9 | 2.3 | 13.4 | 18.3 | 61 | No | Yes | 38 | Yes | No |
| Example 2 | 3 | 2.3 | 13.4 | 18.3 | 61 | No | Yes | 44 | Yes | No |
| Example 3 | 3.1 | 2.3 | 13.4 | 18.3 | 61 | No | Yes | 43 | Yes | No |
| Example 4 | 4.4 | 2.3 | 13.4 | 18.3 | 61 | No | Yes | 33 | Yes | No |
| Example 5 | 4.5 | 2.3 | 13.4 | 18.3 | 61 | No | Yes | 32 | Yes | No |
| Example 6 | 3.9 | 1.7 | 13.4 | 18.3 | 61 | No | Yes | 33 | Yes | No |
| Example 7 | 3.9 | 1.8 | 13.4 | 18.3 | 61 | No | Yes | 34 | Yes | No |
| Example 8 | 3.9 | 2.8 | 13.4 | 18.3 | 61 | No | Yes | 44 | Yes | No |
| Example 9 | 3.9 | 2.9 | 13.4 | 18.3 | 61 | No | Yes | 45 | Yes | No |
| Example 10 | 3.9 | 2.3 | 12.1 | 18.3 | 61.9 | No | Yes | 32 | Yes | No |
| Example 11 | 3.9 | 2.3 | 12.2 | 17.5 | 61.8 | No | Yes | 33 | Yes | No |
| Example 12 | 3.9 | 2.3 | 12.3 | 17.5 | 61.8 | No | Yes | 33 | Yes | No |
| Example 13 | 3.9 | 2.3 | 14.6 | 19.4 | 59.9 | No | Yes | 41 | Yes | No |
| Example 14 | 3.9 | 2.3 | 14.7 | 19.5 | 59.8 | No | Yes | 42 | Yes | No |
| Example 15 | 3.9 | 2.3 | 14.8 | 19.4 | 59.8 | No | Yes | 35 | No | Yes |
| Example 16 | 3.9 | 2.3 | 13.4 | 17.4 | 61.9 | No | Yes | 32 | Yes | No |
| Example 17 | 3.9 | 2.3 | 13.4 | 17.5 | 61.8 | No | Yes | 33 | Yes | No |
| Example 18 | 3.9 | 2.3 | 13.4 | 17.6 | 61.7 | No | Yes | 34 | Yes | No |
| Example 19 | 3.9 | 2.3 | 13.4 | 19.4 | 59.9 | No | Yes | 40 | Yes | No |
| Example 20 | 3.9 | 2.3 | 13.4 | 19.5 | 59.8 | No | Yes | 41 | Yes | No |
| Example 21 | 3.9 | 2.3 | 13.4 | 19.6 | 59.7 | Yes | Yes | - | - | - |

It is understood from Table 1 that the tires of Examples 1-21 each exhibit higher turning limit speed on a turn testing course in the run flat turning test, i.e. can ensure satisfactorily high resistance to coming off of a bead portion from a rim in run flat running, while maintaining satisfactorily high durability of a side-reinforcing rubber, as compared with the tires of Comparative Examples 1-4.
It should be noted that the run flat turning test was not carried out for the tire of Example 21 because damage occurred in the bead toe thereof in the tire-rim assembling test.

### INDUSTRIAL APPLICABILITY

According to our run flat tire, it is possible to provide a run flat tire capable of ensuring satisfactorily high resistance to coming off of a bead portion from a rim in run flat running, while maintaining satisfactorily high durability of a side-reinforcing rubber.

### REFERENCE SIGNS LIST

- 1: Run flat tire
- 2: Bead portion
- 21: Bead heel-side portion
- 22: Bead toe-side portion
- 23, 24: Curved portion
- 2h: Bead heel
- 2t: Bead toe
- 3: Tread portion
- 4: Sidewall portion
- 5: Bead core
- 6: Carcass
- 7: Best
- 8: Bead filler
- 9: Inner liner
- 10: Side-reinforcing rubber
- Dc, Dh: Diameter
- Dr: Rim diameter
- E: End
- Ic: Linking point
- Ih: Bead heel point
- It: Bead toe point
- Pb: Bead base surface
- Po: Bead back surface
- α,β,γ: Angle

## Claims

1. A run flat tire (1), having a tread portion (3), a pair of sidewall portions (4) continuous with respective sides of the tread portion (3), bead portions (2) continuous with the respective sidewall portions (4), bead cores (5) each embedded in the corresponding bead portion (2), and a side-reinforcing rubber (10) having a crescent-shaped cross section and provided in each sidewall portion (4), wherein in a cross section in the tire width direction thereof:
diameter (Dc) of an annular inner end in the tire radial direction of the bead core (5) is larger by 3.0-4.5 mm than rim diameter (Dr) of a prescribed rim;
provided that an intersection of a straight line tangent to an outer contour line of a bead heel (2h) of the bead portion (2) at an end on the bead base surface side of the outer contour line and a straight line tangent to the outer contour line of the bead heel (2h) at an end on the bead back surface side of the outer contour line represents "bead heel point (Ih)" in a case where the outer contour line of the bead heel (2h) of the bead portion (2) is constituted of a curved line, **characterised in that**:
an intersection of an outer contour line, on the bead base surface side, of the bead heel (2h) and an outer contour line, on the bead back surface side, of the bead heel (2h) represents "bead heel point (Ih)" in a case where the outer contour line of the bead heel (2h) of the bead portion (2) is constituted of straight lines, diameter (Dh) of a circle collectively formed by the bead heel point (Ih) is smaller by 1.7-2.9 mm than the rim diameter (Dr) of the prescribed rim;
**in that** an intersection of an imaginary linear extension of a bead base surface (Pb) from an end on the bead base surface side of an outer contour line of a bead toe (2t) of the bead portion (2) and an imaginary linear extension of a bead inner surface from an end on the bead inner surface side of the outer contour line of the bead toe (2t) represents "bead toe point (It)" in a case where the outer contour line of the bead toe (2t) of the bead portion (2) is constituted of a curved line, and provided that an intersection of an outer contour line, on the bead base surface side, of the bead toe (2t) and an outer contour line, on the bead inner surface side, of the bead toe (2t) represents "bead toe point (It)" in a case where the outer contour line of the bead toe (2t) of the bead portion (2) is constituted of straight lines, a line linking the bead heel point (Ih) and the bead toe point (It) is inclined by an angle (α) of 12.2°-14.7° with respect to the tire width direction; and **in that**
in a cross section in the tire width direction thereof:
an outer contour line of a bead base corresponding to the bead base surface (Pb), of an outer contour line of the bead portion (2), includes a linear bead toe-side portion (22) and a curved/linear bead heel-side portion (21) linked with the bead toe-side portion (22) at a linking point;
a tangent of the bead heel-side portion (21) differs from a tangent of the bead toe-side portion (22) when the bead heel-side portion (21) is linear; and
the bead toe-side portion (22) is inclined by an angle (β) of 17.5°-19.5° with respect to the tire width direction.

2. The run flat tire of claim 1, wherein in a cross section in the tire width direction thereof:
the outer contour line of the bead heel (2h) is constituted of a single arc having a radius of curvature of in the range of 5.0-8.0mm; and
an end, on the bead base surface side, of the arc is positioned on the inner side in the tire width direction of the outer end in the tire width direction of the bead core (5).

3. The run flat tire of claim 1 or 2, wherein in a cross section in the tire width direction thereof and provided that a "sectional height" represents a value obtained by multiplying "nominal cross sectional width" and "nominal aspect ratio" of a tire:
the diameter (Dc) is larger by 3.0-4.2 mm than the rim diameter (Dr) and the diameter (Dh) is smaller by 2.0-2.9 mm than the rim diameter (Dr) when the sectional height is ≥ 120 mm; and
the diameter (Dc) is larger by 3.3-4.5 mm than the rim diameter (Dr) and the diameter (Dh) is smaller by 1.7-2.6 mm than the rim diameter (Dr) when the sectional height is < 120 mm.

4. The run flat tire of any of claims 1 to 3, wherein in a cross section in the tire width direction thereof and provided that a "sectional height" represents a value obtained by multiplying "nominal cross sectional width" and "nominal aspect ratio" of a tire:
the angle α is in the range of 12.5°-14.7° when the sectional height is ≥ 120 mm; and the angle α is in the range of 12.2°-14.4° when the sectional height is < 120 mm.

5. The run flat tire of any of claims 1 to 4, wherein in a cross section in the tire width direction thereof:
the angle β is in the range of 18.0°-19.5° when the sectional height is ≥ 120 mm; and the angle β is in the range of 17.5°-19.0° when the sectional height is < 120 mm.

6. The run flat tire of any of claims 1 to 5, wherein in a cross section in the tire width direction thereof an angle formed at a bead toe point (It) by linear outer contour lines/linear extensions of outer contour lines of the bead portion (2) is ≥ 30°.

7. The run flat tire of any of claims 1 to 6, wherein a textile chafer is provided at least between the bead core (5) and the bead base surface (Pb) of the bead portion (2).

## Patentansprüche

1. Notlaufreifen (1), der einen Laufflächenabschnitt (3), ein Paar von Seitenwandabschnitten (4), durchgehend mit jeweiligen Seiten des Laufflächenabschnitts (3), Wulstabschnitte (2), durchgehend mit den jeweiligen Seitenwandabschnitten (4), Wulstkerne (5), die jeweils in dem entsprechenden Wulstabschnitt (2) eingebettet sind, und einen Seitenverstärkungsgummi (10), der einen halbmondförmigen Querschnitt hat und in jedem Seitenwandabschnitt (4) bereitgestellt wird, hat, wobei in einem Querschnitt in der Reifenbreitenrichtung desselben:
ein Durchmesser (Dc) eines ringförmigen in der Reifenradialrichtung inneren Endes des Wulstkerns (5) um 3,0 bis 4,5 mm größer ist als ein Felgendurchmesser (Dr) einer vorgeschriebenen Felge,
mit der Maßgabe, dass ein Schnittpunkt einer geraden Linie, die tangential zu einer äußeren Umrisslinie einer Wulstferse (2h) des Wulstabschnitts (2) an einem Ende auf der Wulstkantenflächenseite der äußeren Umrisslinie ist, und einer geraden Linie, die tangential zu der äußeren Umrisslinie der Wulstferse (2h) an einem Ende auf der Wulstrückflächenseite der äußeren Umrisslinie ist, in einem Fall, in dem die äußere Umrisslinie der Wulstferse (2h) des Wulstabschnitts (2) aus einer gekrümmten Linie besteht, einen "Wulstfersenpunkt (Ih)" darstellt, **dadurch gekennzeichnet, dass**:
ein Schnittpunkt einer äußeren Umrisslinie, auf der Wulstkantenflächenseite, der Wulstferse (2h) und einer äußeren Umrisslinie, auf der Wulstrückenflächenseite, der Wulstferse (2h) in einem Fall, in dem die äußere Umrisslinie der Wulstferse (2h) des Wulstabschnitts (2) aus geraden Linien besteht, einen "Wulstfersenpunkt (Ih)" darstellt, ein Durchmesser (Dh) eines Kreises, der gemeinsam durch den Wulstfersenpunkt (Ih) gebildet wird, um 1,7 bis 2,9 mm kleiner ist als der Felgendurchmesser (Dr) der vorgeschriebenen Felge,
dadurch, dass ein Schnittpunkt einer imaginären linearen Verlängerung einer Wulstkantenfläche (Pb) von einem Ende auf der Wulstkantenflächenseite einer äußeren Umrisslinie einer Wulstspitze (2t) des Wulstabschnitts (2) und einer imaginären linearen Verlängerung einer Wulstinnenfläche von einem Ende auf der Wulstinnenflächenseite der äußeren Umrisslinie der Wulstspitze (2t) in einem Fall, in dem die äußere Umrisslinie der Wulstspitze (2t) des Wulstabschnitts (2) aus einer gekrümmten Linie besteht, einen "Wulstspitzenpunkt (It)" darstellt und mit der Maßgabe, dass ein Schnittpunkt einer äußeren Umrisslinie, auf der Wulstkantenflächenseite, der Wulstspitze (2t) und einer äußeren Umrisslinie, auf der Wulstinnenflächenseite, der Wulstspitze (2t) in einem Fall, in dem die äußere Umrisslinie der Wulstspitze (2t) des Wulstabschnitts (2) aus geraden Linien besteht, einen "Wulstspitzenpunkt (It)" darstellt, eine Linie, die den Wulstfersenpunkt (Ih) und den Wulstspitzenpunkt (It) verbindet, um einen Winkel (α) von 12,2° bis 14,7° in Bezug auf die Reifenbreitenrichtung geneigt ist und dadurch, dass
in einem Querschnitt in der Reifenbreitenrichtung desselben:
eine äußere Umrisslinie einer Wulstkante, die der Wulstkantenfläche (Pb) entspricht von einer äußeren Umfangslinie des Wulstabschnitts (2), einen linearen wulstspitzenseitigen Abschnitt (22) und einen gekrümmten/linearen wulstfersenseitigen Abschnitt (21), der an einem Verbindungspunkt mit dem wulstspitzenseitigen Abschnitt (22) verbunden ist, einschließt,
eine Tangente des wulstfersenseitigen Abschnitts (21) sich von einer Tangente des wulstspitzenseitigen Abschnitts (22) unterscheidet, wenn der wulstfersenseitige Abschnitt (21) linear ist, und
der wulstspitzenseitige Abschnitt (22) um einen Winkel z) von 17,5° bis 19,5° in Bezug auf die Reifenbreitenrichtung geneigt ist.

2. Notlaufreifen (1) nach Anspruch 1, wobei in einem Querschnitt in der Reifenbreitenrichtung desselben:
die äußere Umrisslinie der Wulstferse (2h) aus einem einzigen Bogen besteht, der einen Krümmungsradius in dem Bereich von 5,0 bis 8,0 mm hat, und
ein Ende, auf der Wulstkantenflächenseite, des Bogens auf der in der Reifenbreitenrichtung inneren Seite des in der Reifenbreitenrichtung äußeren Endes des Wulstkerns (5) angeordnet ist.

3. Notlaufreifen (1) nach Anspruch 1 oder 2, wobei in einem Querschnitt in der Reifenbreitenrichtung desselben und mit der Maßgabe, dass eine "Schnitthöhe" einen Wert darstellt, der erhalten wird durch das Multiplizieren der "nominellen Querschnittsbreite" und des "nominellen Seitenverhältnisses" eines Reifens:
der Durchmesser (Dc) um 3,0 bis 4,2 mm größer ist als der Felgendurchmesser (Dr) und der Durchmesser (Dh) um 2,0 bis 2,9 mm kleiner ist als der Felgendurchmesser (Dr), wenn die Schnitthöhe ≥ 120 mm ist, und
der Durchmesser (Dc) um 3,3 bis 4,5 mm größer ist als der Felgendurchmesser (Dr) und der Durchmesser (Dh) um 1,7 bis 2,6 mm kleiner ist als der Felgendurchmesser (Dr), wenn die Schnitthöhe < 120 mm ist.

4. Notlaufreifen (1) nach einem der Ansprüche 1 bis 3, wobei in einem Querschnitt in der Reifenbreitenrichtung desselben und mit der Maßgabe, dass eine "Schnitthöhe" einen Wert darstellt, der erhalten wird durch das Multiplizieren der "nominellen Querschnittsbreite" und des "nominellen Seitenverhältnisses" eines Reifens:
der Winkel α in dem Bereich von 12,5° bis 14,7° liegt, wenn die Schnitthöhe ≥ 120 mm ist, und der Winkel α in dem Bereich von 12,2° bis 14,4° liegt, wenn die Schnitthöhe < 120 mm ist.

5. Notlaufreifen nach einem der Ansprüche 1 bis 4, wobei in einem Querschnitt in der Reifenbreitenrichtung desselben:
der Winkel β in dem Bereich von 18,0° bis 19,5° liegt, wenn die Schnitthöhe ≥ 120 mm ist, und der Winkel β in dem Bereich von 17,5° bis 19,0° liegt, wenn die Schnitthöhe < 120 mm ist.

6. Notlaufreifen (1) nach einem der Ansprüche 1 bis 5, wobei in einem Querschnitt in der Reifenbreitenrichtung desselben ein Winkel, der an einem Wulstspitzenpunkt (It) durch lineare äußere Umrisslinien/lineare Verlängerungen von äußeren Umrisslinien des Wulstabschnitts (2) gebildet wird, ≥ 30° ist.

7. Notlaufreifen (1) nach einem der Ansprüche 1 bis 6, wobei ein textiles Wulstband wenigstens zwischen dem Wulstkern (5) und der Wulstkantenfläche (Pb) des Wulstabschnitts (2) bereitgestellt wird.

## Revendications

1. Pneumatique à mobilité étendue (1), présentant une partie bande de roulement (3), une paire de parties de flanc (4) constituées dans la continuité de côtés respectifs de la partie bande de roulement (3), des parties de talon (2) constituées dans la continuité des parties de flanc (4) respectives, des tringles (5) respectivement incorporées dans la partie de talon (2) correspondante, et un caoutchouc de renfort latéral (10) présentant une section transversale en forme de croissant et prévu dans chacune des parties de flanc (4), dans lequel, selon une coupe transversale réalisée dans le sens de la largeur du pneumatique :
le diamètre (Dc) d'une extrémité annulaire intérieure de la tringle (5) dans le sens radial du pneumatique fait 3,0 à 4,5 mm de plus que le diamètre de la jante (Dr) d'une jante prescrite ;
dans la mesure où une intersection entre une ligne droite tangente à une ligne de pourtour extérieure d'un arrière du talon (2h) de la partie de talon (2), sur une extrémité, côté surface de base du talon, de la ligne de pourtour extérieure et une ligne droite tangente à la ligne de pourtour extérieure de l'arrière du talon (2h), sur une extrémité, côté surface arrière du talon, de la ligne de pourtour extérieure représente le « point arrière du talon (Ih) », en sachant que la ligne de pourtour extérieure de l'arrière du talon (2h) de la partie de talon (2) se compose d'une ligne courbe, **caractérisé en ce que** :
une intersection entre une ligne de pourtour extérieure, sur le côté surface de base du talon, de l'arrière du talon (2h) et une ligne de pourtour extérieure, côté surface arrière du talon, de l'arrière du talon (2h) représente le « point arrière du talon (Ih) » en sachant que la ligne de pourtour extérieure de l'arrière du talon (2h) de la partie de talon (2) se compose de lignes droites, le diamètre (Dh) d'un cercle collectivement formé par le point arrière du talon (Ih) fait 1,7 à 2,9 mm de moins que le diamètre de jante (Dr) relatif à la jante prescrite ;
**en ce qu'**une intersection entre un prolongement linéaire imaginaire d'une surface de base du talon (Pb), depuis une extrémité, côté surface de base du talon, d'une ligne de pourtour extérieure de l'avant du talon (2t) de la partie de talon (2) et un prolongement linéaire imaginaire d'une surface intérieure du talon, depuis une extrémité, côté surface intérieure du talon, de la ligne de pourtour extérieure de l'avant du talon (2t) représente le « point avant du talon (It) », en sachant que la ligne de pourtour extérieure de l'avant du talon (2t) de la partie de talon (2) se compose d'une ligne courbe, et dans la mesure où une intersection entre une ligne de pourtour extérieure, côté surface de base du talon, de l'avant du talon (2t) et une ligne de pourtour extérieure, côté surface intérieure du talon, de l'avant du talon (2t) représente le « point avant du talon (It) » en sachant que la ligne de pourtour extérieure de l'avant du talon (2t) de la partie de talon (2) se compose de lignes droites, une ligne reliant le point arrière du talon (Ih) et le point avant du talon (It) est inclinée selon un angle (α) de 12,2° à 14,7° par rapport au sens de la largeur du pneumatique ; et **en ce que**
selon une coupe transversale réalisée dans le sens de la largeur du pneumatique :
une ligne de pourtour extérieure d'une base du talon correspondant à la surface de base du talon (Pb), d'une ligne de pourtour extérieure de la partie de talon (2), comporte une partie latérale linéaire de l'avant du talon (22) et une partie latérale courbe/linéaire de l'arrière du talon (21) liée à la partie latérale de l'avant du talon (22) en un point de liaison ;
une tangente de la partie latérale de l'arrière du talon (21) diffère d'une tangente de la partie latérale de l'avant du talon (22) lorsque la partie latérale de l'arrière du talon (21) est linéaire ; et
la partie latérale de l'avant du talon (22) est inclinée selon un angle (β) de 17,5° à 19,5° par rapport au sens de la largeur du pneumatique.

2. Pneumatique à mobilité étendue selon la revendication 1, dans lequel, selon une coupe transversale réalisée dans le sens de la largeur du pneumatique :
la ligne de pourtour extérieure de l'arrière du talon (2h) se compose d'un arc unique présentant un rayon de courbure situé dans l'intervalle de 5,0 à 8,0 mm ; et
une extrémité, sur le côté surface de base du talon, de l'arc est située sur le côté intérieur, vu dans le sens de la largeur du pneumatique, de l'extrémité extérieure, vu dans le sens de la largeur du pneumatique de la tringle (5).

3. Pneumatique à mobilité étendue selon la revendication 1 ou 2, dans lequel, selon une coupe transversale réalisée dans le sens de la largeur du pneumatique et dans la mesure où une « hauteur sectionnelle » représente une valeur obtenue en multipliant la « largeur transversale nominale » et le « rapport d'aspect nominal » d'un pneumatique :
le diamètre (Dc) fait 3,0 à 4,2 mm de plus que le diamètre de la jante (Dr) et le diamètre (Dh) fait 2,0 à 2,9 mm de moins que le diamètre de la jante (Dr) lorsque la hauteur sectionnelle est ≥120 mm ; et
le diamètre (Dc) fait 3,3 à 4,5 mm de plus que le diamètre de la jante (Dr) et le diamètre (Dh) fait 1,7 à 2,6 mm de moins que le diamètre de la jante (Dr) lorsque la hauteur sectionnelle est <120 mm.

4. Pneumatique à mobilité étendue selon l'une quelconque des revendications 1 à 3, dans lequel selon une coupe transversale réalisée dans le sens de la largeur du pneumatique et dans la mesure où la « hauteur sectionnelle » représente une valeur obtenue en multipliant la «largeur transversale nominale » et le «rapport d'aspect nominal » d'un pneumatique :
l'angle α se situe dans l'intervalle de 12,5° à 14,7° lorsque la hauteur sectionnelle est ≥120 mm ; et l'angle α se situe dans l'intervalle de 12,2° à 14,4° lorsque la hauteur sectionnelle est <120 mm.

5. Pneumatique à mobilité étendue selon l'une quelconque des revendications 1 à 4, dans lequel, selon une coupe transversale réalisée dans le sens de la largeur du pneumatique :
l'angle β se situe dans l'intervalle de 18,0° à 19,5° lorsque la hauteur sectionnelle est ≥120 mm ; et l'angle β se situe dans l'intervalle de 17,5° à 19,0° lorsque la hauteur sectionnelle est <120 mm.

6. Pneumatique à mobilité étendue selon l'une quelconque des revendications 1 à 5, dans lequel, selon une coupe transversale réalisée dans le sens de la largeur du pneumatique, un angle formé en un point avant du talon (It) par des lignes linéaires de pourtour extérieur / des prolongements linéaires de la ligne de pourtour extérieur de la partie de talon (2) est ≥ 30°.

7. Pneumatique à mobilité étendue selon l'une quelconque des revendications 1 à 6, dans lequel une bandelette talon en textile est prévue au moins entre la tringle (5) et la surface de base du talon (Pb) de la partie de talon (2).
